# EUROPEAN PATENT APPLICATION

(11) **EP 3 771 345 A1**
(43) Date of publication of application: **03.02.2021**
(21) Application number: 20187629.9
(22) Date of filing: 24.07.2020
(51) Int. Cl.: A23L 13/50, A23L 15/00, A61K 35/57

(54) **USE OF CHICKEN EMBRYO MEAT**

(30) Priority: 29.07.2019 NL 2023582
(71) Applicant: HatchTech Group B.V., 3905 TB Veenendaal (NL)
(72) Inventor: Meter, Tjitze, 3911 ET Rhenen (NL)
(74) Representative: Nederlandsch Octrooibureau

(57) **Abstract**

The current invention relates to a method of producing an edible meat product for human consumption, the method comprising:
a. detecting a living poultry embryo in ovo,
b. processing an egg comprising separating the living poultry embryo from the remainder of its egg, and
c. forming an edible meat product of one or more poultry embryos.
Using poultry embryos to form an edible meat product enables to make use of a waste stream of rejected embryonated eggs.

## Description

### Field of the invention

The present invention relates to a method of producing an edible meat product for human or animal consumption. In particular, the present invention relates to the use of chicken embryo as a basis for an edible meat product. More particular, the present invention relates to the use of male chicken embryo as a basis for an edible meat product.

### Background art

Increase of consumption of animal protein is a global trend. This involves that consumers will be eating more poultry by 2050 with nearly 10 billion mouths to feed. To meet the demand for meat production, there are initiatives for slaughter-free meat. One example of such an initiative is meat that is harvested directly from cow cells, rather than raising and slaughtering a whole animal.

WO9931223(A1) relates a process for production of a meat product. The process is the culturing in vitro of animal cells in medium free of hazardous substances for humans on an industrial scale thereby providing three dimensional animal muscle tissue suited for human and/or animal consumption, optionally followed by further processing steps of the cell culture to a finished food product analogous to known processes for meat comprising food products without requiring deboning, removal of offal and/or tendon and/or gristle and/or fat.

There exist different kind of objections to in-vitro meat. This artificial meat is perceived as unnatural by the public and cost of production is currently an issue. Therefore, there is a need for alternative slaughter free meat products.

### Summary of the invention

The present invention seeks to provide a method of producing an edible meat product for human consumption which method is more efficient and enables the use of a waste stream.

The present invention also seeks to provide a method of producing an edible meat product for human consumption which at least partly solves one or more problems with past methods used for producing meat product.

The present invention also seeks to provide an alternative method of producing an edible meat product for human consumption.

Therefore, the invention provides a method of producing an edible meat product for human consumption, the method comprising
a. detecting a living poultry embryo in ovo,
b. processing an egg comprising separating the living poultry embryo from the remainder of its egg, and
c. forming an edible meat product of one or more poultry embryos, the meat product being edible as perceived with the eye by a meat consumer.

Using poultry embryos to form an edible meat product enables to make use of a waste stream of rejected embryonated eggs. Processing poultry embryos into meat products provides an alternative to slaughter free meat. It is an alternative because less or no pain is perceived by the chicken embryo.

Important is that the edible meat product, in particular the form of the meat product, is recognizable and perceived with the eye by a meat consumer as an edible meat product on her or his plate. It is a meat product as available in a butcher's shop or from the meatman. The one or more embryos can be reformed and compressed into an intended form to obtain the edible meat products from poultry meat. Slaughter free meat is to say that no grown up animal, in this case poultry, needs to be slaughtered to be able to enjoy a meat product. Well known examples of an edible meat product are; a sausage, a burger or chicken fillet. The method concerning a method of producing an edible meat product and step c requiring forming an edible meat product implies that the the meat product is edible as perceived with the eye by a meat consumer. Nevertheless, the wording "the meat product being edible as perceived with the eye by a meat consumer" is included in step c for clarification purposes. Technically, step c requires forming an edible meat product of one or more poultry embryos.

An example of a waste stream of rejected embryonated eggs is a stream of embryonated eggs rejected based on gender and having a male poultry embryo. In the hatcheries, the practice of culling a day old male layer chicks is commonly done since they are not producing eggs. However, this practice gains more and more pressures because of animal welfare and waste disposal. Therefore, some different approaches to avoid the culling of male chicken have been established, such as rearing the cock as an edible meat source. However, rearing the cock of a laying hen breeding line is not economically viable because of poor food conversion characteristics. Therefore, there are initiatives to select poultry embryos as soon as possible based on gender. This results in the mentioned waste stream of rejected embryonated eggs having a male poultry embryo.

Alternatively, it is conceivable to use intentionally incubated eggs for forming an edible meat product of poultry embryos. This seems a surprisingly efficient way to produce a meat product.

It is conceivable that embryos of other oviparous species are used. However, the use of poultry embryos seems a right start to obtain a similar taste profile as conventional chicken meat.

More in general, the invention therefore provides a use of living poultry embryos for producing an edible meat product for human consumption, before pain perception is possible by the embryos. The living poultry embryos are normally in the form of embryonated eggs. In some cultures it is known to eat poultry embryos, however this is in such a late development stage of the poultry embryo that pain is perceived by the embryo. Also, this use of a poultry embryo is not in an industrial setting wherein the embryo is processed into a meat product. An example of known use of a poultry embryo is "Balut" that involves a developing poultry embryo, first detecting if the embyo is alive (as dead animals may not be used due to food safety regulations), then boiling and eating from the shell. Balut originates from and is commonly sold as street food in the Philippines.

In an embodiment, the method comprises a step of rejecting an egg. The rejecting of the egg occurs at least before separating the poultry embryo from the remainder of its egg. It will be understood that the step of rejecting an egg is related to the step of detecting a living poultry embryo in ovo. The step of rejecting an egg at least assures that only live embryos are used to produce the edible meat product. However, the rejection can be based on other parameters as well, like e.g. gender.

In an embodiment, the method comprises incubating eggs during a predetermined incubating period, and separating the poultry embryo from the remainder of its egg after the incubating period and only before pain perception is possible by the embryos. The step of incubating eggs during a predetermined incubating period enables to choose an optimum with respect to energy to meat conversion while actually, no pain is perceived by the chicken embryos. Therefore, a meat product is obtained without animal suffering.

In an embodiment of the method, the incubating period ends before the nervous system of the embryo is developed and the embryo can perceive pain. This all the more assures that no pain is perceived by the chicken embryos. In connection with pain perception of chicken embryos, we refer to a publication of the "Wissenschaftliche Dienste" of the "Deutscher Bundestag" with reference WD 8 - 3000 - 030/17 and titled "Zum Schmerzempfinden von Huhnerembryonen".

In an embodiment of the method, the incubating period ends before the 15th day, preferably before the 11th day, with more preference before the 9th day. These periods are all examples of incubating periods that end before the nervous system of the embryo is developed to such an extent that the embryo can perceive pain.

In an embodiment of the method, the processing the egg comprises separating useful egg components from not-useful egg components. Depending on the conditions and circumstances, any egg component can be useful like for example the albumen, the yolk or the shell or components thereof.

In an embodiment of the method, the processing the egg comprises any of sieving, filtering, centrifuging, cutting, drying, heating, cooling or a combination thereof. The step of drying seeks to control the content of moisture during the processing and in the meat product. The moisture content is an important aspect in connection with processability.

In an embodiment, the method comprises handling the chicken embryo in order to provide a suitable orientation of the embryo before further processing the chicken embryo. The handling of the egg enables to orientate the embryo into an optimal position for further processing.

In an embodiment, the method comprises obtaining data associated with an embryo and based on the obtained data perform the handling of the embryo in order to provide a suitable orientation of the embryo. This all the more enables to orientate the embryo in the egg into an optimal position for further processing.

In an embodiment of the method, the obtaining data associated with an embryo comprises weighing the embryo and/or imaging the embryo. This even more enables to orientate the embryo into an optimal position for further processing.

In an embodiment, the method comprises rejecting an embryo based on the obtained data associated with the embryo, and or gender information of the embryo. This enables to have more control over the quality of the edible meat product.

In an embodiment of the method, the obtained data associated with the embryo represents dimensions, shapes and colours of the embryo and rejection criteria comprise reference dimensions, shapes and colours. These data are examples of criteria that can form a basis for rejection of an embryo in order to have more control over the quality of the edible meat product.

In an embodiment, the method comprises dividing an embryo in one or more embryo parts. This allows to have even more control over the quality of the edible meat product.

In an embodiment, the method comprises separating an embryo head from an embryo trunk. Separating the head may improve the quality of the meat product as perceived by the public that in general does not like to eat brain tissue. Also, this avoids that an early developed beak ends up in the meat product.

In an embodiment, the method comprises fine cutting and/or grinding of an embryo or embryo parts. The improves further processing into different kind of meat products like e.g. a sausage or a burger.

In an embodiment, the method comprises adding ingredients or other additives in order to improve the edible meat product. The ingredients or other additives may comprise any of a smelling agent, colouring agent, flavouring agent, binding agent, or a combination thereof.

In an embodiment, the method comprises deriving any of the ingredients or other additives from the remainder of the egg. Deriving any of the ingredients or other additives from the remainder of the egg even more enables to make use of a waste stream of rejected embryonated eggs or in other words avoid waste of resources.

In an embodiment, the method comprises processing the remainder of an egg into an animal nutrition product. Processing the remainder of an egg into an animal nutrition product even more enables to make use of a waste stream of rejected embryonated eggs or in other words avoid waste of resources.

In an embodiment of the method, eggs originate from a selection step that results in rejection of eggs in a incubating or hatching process. Use of eggs that originate from a selection step that results in reject of eggs in a incubating or hatching process enables to make use of a waste stream that already exists as an output of a incubating and/or hatching process. The rejected eggs are then used as input for the process that ends in an edible meat product.

In an embodiment of the method, one or more steps are automated. This automation enables cost reduction and improves quality.

The current invention also relates to an edible meat product for human consumption and obtained by the method as described above.

The current invention also relates to an apparatus for performing the method as described above.

The present invention will be described with reference to a number of exemplary embodiments as shown in the schematic drawings wherein;
Fig. 1 shows a method according to the invention while fig. 2 -6 steps of embodiments of the method according to the invention; wherein;
Fig. 2 shows a step of rejecting an egg;
Fig. 3 shows a step wherein eggs originate from a selection step that results in reject of eggs from a incubating or hatching process;
Fig. 4 shows a step of orientating an embryo;
Fig. 5 shows a step of obtaining data associated with an embryo; and
Fig. 6 shows a step of adding ingredients or other additives s in order to improve the edible meat product.

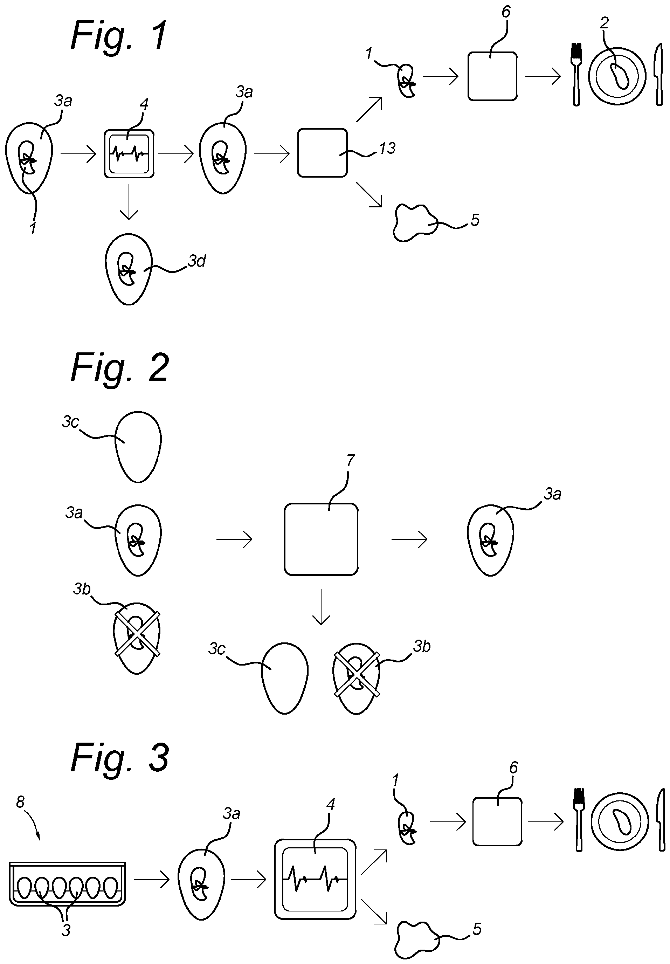

The present invention will now be described in more detail referring to the figures. Fig. 1 shows a method of producing an edible meat product 2. The meat product 2 is suitable for human consumption. The method comprises detecting 4 a living poultry embryo 1 in ovo. The eggs 3a are subjected to the detecting step. An egg that contains a living embryo is still referred to with reference number 3a. An egg 3a wherein the presence of a living embryo cannot be established is rejected and is referred to with reference number 3d. The eggs 3a that contain a living embryo 1 are transferred to the next step of the method which is the processing 13 of an egg 3a comprising separating the living poultry embryo 1 from the remainder 5 of its egg. The last step as shown here is the forming 6 of an edible meat product 2 of one or more living poultry embryos 1. As clearly shown, the edible meat product 2 is recognizable and perceiveable with the eye by a meat consumer as an edible meat product 2 on her or his plate. Here, the edible meat product 2 is in the form of a chicken fillet. It will be clear that any meat product as available in a butcher's shop or from the meatman is conceivable, like for example a sausage or a burger. The remainder 5 of an egg may be processed into an animal nutrition product not shown.

Beside comprising separating the living poultry embryo 1 from the remainder 5 of its egg, the processing 13 of an egg 3a and/or forming 6 of an edible meat product 2 may comprise a number of optional steps. The processing step 13 and forming step 6 is schematically shown as a functional block. The processing and/or forming (which necessarily involves the killing of the embryo) may comprise operations on the embryo 1 itself like dividing an embryo in one or more embryo parts, separating an embryo head from an embryo trunk, and fine cutting and/or grinding of an embryo or embryo parts. Another optional step is any of sieving, filtering, centrifuging, cutting, drying or a combination thereof. The processing of the egg may comprise separating useful egg components from not-useful egg components. The forming 6 may include molding of the meat product 2.
Although the figures are schematic, it will be clear that one or more steps shown in any of the figures can and normally will be automated.

Fig. 2 shows a step of rejecting 7 an egg 3b, 3c. The input for the rejecting step 7 are the eggs 3a, 3b and 3c. These eggs contain eggs 3a with a living embryo, eggs 3c with no embryo and eggs 3b with a dead embryo. In the step of rejecting 7, the eggs 3c with no embryo and eggs 3b with a dead embryo are separated from the eggs 3a with a living embryo. The eggs 3a with a living embryo will be used for producing the edible meat product 2. The step of rejecting 7 an egg 3b, 3c is executed at least before separating the poultry embryo 1 from the remainder of its egg 5. The step of rejecting 7 an egg comprises the step of detecting 4 a living poultry embryo 1 in ovo, as shown in fig. 1.

In an embodiment, the step of rejecting 7 also comprises rejecting eggs 3a with a living female embryo. This results in only eggs 3a with a living male embryo ending up in the edible meat product.

Fig. 3 shows a step wherein eggs originate from a selection step that results in reject of eggs from a incubating 8 or hatching process. Here, the method comprises incubating 8 eggs 3 during an incubating period. This incubating is schematically shown by an incubating crate 8. After the incubating period ends, the method continues as in fig. 1 by separating the poultry embryo 1 from the remainder of its egg 5 before pain perception is possible by the embryos 1. It is essential that the incubating period ends before the nervous system of the embryo is developed to the point that the embryo can perceive pain. Therefore, the incubating period ends before the 15th day, preferably before the 11th day, with more preference before the 9th day.

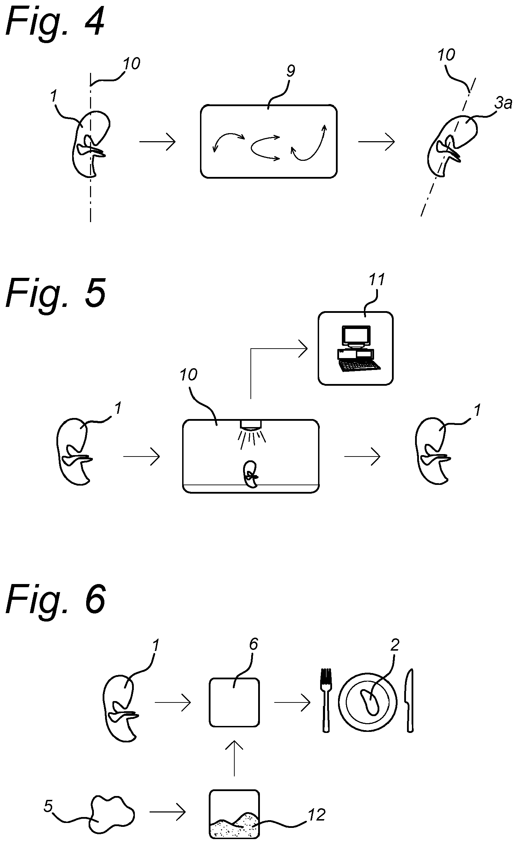

Fig. 4 shows a step of orientating an embryo 1. Here, the method comprises a step of handling 9 the embryo 1. The process of handling 9 and the schematically depicted handling device 9 are both referred to with reference number 9. The embryo 1 is handled in order to provide a suitable orientation of the embryo 1. The embryo 1 is handled by the handling device 9 before further processing the chicken embryo 1. Because of the step of handling the embryo 1, the embryo 1 can be maneuvered in a suitable position for further processing.

Fig. 5 shows a step of obtaining data 11 associated with an embryo 1. The data 11 is schematically depicted as a personal computer. Here, the shown step of obtaining data associated with an embryo comprises imaging 10 the embryo. Other conceivable data acquiring steps may include e.g. obtaining gender information of the embryo, weighing of the embryo 1 and measuring a temperature associated with the embryo 1. The obtained data associated with the embryo may represent dimensions, shapes and colors of the embryo and rejection criteria may comprise reference dimensions, shapes and colors. The obtained data 11 associated with the embryo may provide a basis for the step of rejecting 7 an embryo as shown in fig. 1 and 2. The obtained data 11 associated with the embryo can also provide a basis for the step shown in fig. 4 of handling of the egg in order to provide a suitable orientation of the embryo.

Fig. 6 shows a step of adding ingredients or other additives 12 in order to improve the edible meat product 2. The ingredients or other additives are not specified in detail but the may comprise any of a smelling agent, coloring agent, flavoring agent, binding agent, or a combination thereof. As shown the step here comprises deriving any of the ingredients or other additives 12 from the remainder of the egg 5.

Modifications and alternative implementations of some parts or elements are possible, and are included in the scope of protection as defined in the appended claims.

## Claims

1. Method of producing an edible meat product (2) for human consumption, comprising
- detecting (4) a living poultry embryo (1) in ovo,
- processing (13) an egg (3a) comprising separating the living poultry embryo (1) from the remainder (5) of its egg, and
- forming (6) an edible meat product of one or more poultry embryos (1), the meat product being edible as perceived with the eye by a meat consumer.

2. Method according to claim 1, comprising a step of rejecting (7) an egg (3b, 3c), at least before separating the poultry embryo (1) from the remainder of its egg (5).

3. Method according a preceding claim, comprising incubating (8) eggs (3) during an incubating period, and separating the poultry embryo (1) from the remainder of its egg (5) after the incubating period and only before pain perception is possible by the embryos (1).

4. Method according to claim 3, wherein the incubating period ends before the nervous system of the embryo is developed to an extent that the embryo can perceive pain.

5. Method according to claim 3 or 4, wherein the incubating period ends before the 15th day, preferably before the 11th day, with more preference before the 9^{th} day.

6. Method according to a preceding claim, wherein processing the egg comprises any of sieving, filtering, centrifuging, cutting, drying, heating cooling or a combination thereof.

7. Method according to a preceding claim, comprising handling (9) the embryo (1) in order to provide a suitable orientation of the embryo before further processing the chicken embryo (1).

8. Method according to claim 7, comprising obtaining data (11) associated with an embryo and based on the obtained data, perform the handling of the embryo in order to provide a suitable orientation of the embryo, wherein in particular the obtaining data associated with an embryo comprises weighing the embryo and/or imaging (10) the embryo.

9. Method according to claim 8, comprising rejecting (7) an embryo based on the obtained data (11) associated with the embryo, and/or gender information of the embryo, wherein in particular the obtained data associated with the embryo represents dimensions, shapes and colors of the embryo, and rejection criteria comprise reference dimensions, shapes and colors.

10. Method according to a preceding claim, comprising dividing an embryo in one or more embryo parts.

11. Method according to a preceding claim, comprising separating an embryo head from an embryo trunk.

12. Method according to a preceding claim, comprising fine cutting and/or grinding of an embryo or embryo parts.

13. Method according to a preceding claim, comprising adding ingredients or other additives (12) in order to improve the edible meat product, wherein in particular the ingredients or other additives comprise any of a smelling agent, coloring agent, flavoring agent, binding agent, or a combination thereof.

14. Method according to claim 13, comprising deriving any of the ingredients or other additivess (12) from the remainder of the egg (5).

15. Method according to a preceding claim, wherein eggs originate from a selection step that results in reject of eggs in a incubating (8) or hatching process.
